# EUROPEAN PATENT APPLICATION

(11) **EP 1 647 238 A1**
(43) Date of publication of application: **19.04.2006**
(21) Application number: 05255555.4
(22) Date of filing: 09.09.2005
(51) Int. Cl.: A61C 3/00

(54) **Rotatable dental handle**

(30) Priority: 14.10.2004 US 618761 P; 07.06.2005 US 146539
(71) Applicant: Hu-Friedy Mfg. Co., Inc., Chicago, Illinois 60618 (US)
(72) Inventor: Tipton, David W., Rolling Meadows, Illinois 60008 (US); Neiner, Karen L., Chicago, Illinois 60605 (US); Wax, Howard, Deerfield, Illinois 60015 (US); Brown, Claude P., Highland Park Illinois 60035 (US); Boyden, Susan K., Portage, Indiana 46368 (US); Bollig, William, Elk Grove Village, Illinois 60007 (US); Follmar, Chad A., Evanston, Illinois 60202 (US); Bone, Brian Charles, St Louis, Missouri 63146 (US); Rutter, Bryce G., St Louis, Missouri 63141 (US); Feng, Feng, St Louis, Missouri 63132 (US); Doty, Heath A., St Louis, Missouri 63109 (US)
(74) Representative: Fenlon, Christine Lesley

(57) **Abstract**

A dental instrument (10) has a concave central section (12a) to facilitate end-to-end rotation during use. First and second ends (20a, 20b) of the instrument (10) extend axially from the central section (12a). At least one of the ends (20a, 20b) interfaces with a dental device such as a mirror or tip (24a, 24b). The ends (20a, 20b) are configured for a smooth transition from adjacent end to the respective device.

## Description

This invention pertains to hand held dental instruments. More particularly, the invention pertains to such instruments which have comfortable to use shapes.

It has been recognized that hand held dental instruments with relatively enlarged, elastomeric handles can be more comfortable to use than the traditional metal handles which are usually cylindrical and have a constant radius.

One known form of elastomeric handle is disclosed in U.S. Patent No. 5,816, 806 entitled "Dental Instrument with Large Molded Handles'. The '806 patent is assigned to the assignee hereof and incorporated herein by reference.

Another form of a molded instrument handle has been disclosed in U.S. Patent No. 6,361,317 entitled "Molded, Reinforced Instrument Handle". The '317 patent is assigned to the assignee hereof and incorporated herein by reference.

While the above-noted instruments and dental handles have been effective and suitable for their intended purposes, there continues to be a need for dental handles which provide comfortable gripping surfaces for the users. Preferably such handles could be readily rotatable end to end and also provide comfortable gripping regions for the users adjacent to the treatment applying tips.

An instrument which embodies the present invention includes a handle which has first and second sections which are joined on a common centerline. The first and second sections can preferably have an external periphery which has a diameter that varies non-linearly, axially, along the common centerline. Alternately, the periphery can be tapered.

Each of the sections is joined to the other by a concave region which has a shortest diameter, relative to the centerline, which is less than a maximum diameter of each of the sections. In a disclosed embodiment, at least one tip structure is attached to an end of the handle. A tip structure can include a truncated cone which carries a treatment applying tip.

In one aspect of an embodiment of the invention, the cone includes first and second end surfaces. One end surface has a diameter substantially equal to a diameter of an end of the handle. The other end surface has a smaller diameter.

In a further aspect of the embodiment of the invention, the handle can have a first taper which might have a varying degree of taper, or alternately, an elliptical-type periphery. The cone can have a second taper that might be substantially constant, or, linear. In one disclosed embodiment, the second taper is greater than the first taper.

The cone defines a tip receiving depression, in one embodiment, which is adjacent to one of the end surfaces. A tip can be carried in the depression and permanently attached to the cone. For example, welding or adhesive could be used to attach the tip to the cone all without limitation. Alternatively, the tip or tips might be replaceable.

In another aspect of an embodiment of the invention, the handle includes a centrally located concave section. The concave section joins first and second axially oriented elongated regions. The regions have a varying diameter and extend to and terminate in at least one treatment applying tip. The concave section can have shortest diameter which exceeds a diameter of a cone which is adjacent to the treatment applying tip. In yet another aspect of an embodiment of the invention, a shortest diameter of the concave section can be less than a diameter of the cone.

The handle in a preferred embodiment can include a central core molded of a predetermined resin. The resin used for the central core can be rigid. An elastomeric silicon grip can be molded over portions of the central core.

In an enclosed embodiment, at least one tip carrying cone can slidably engage, and be attached to the central core. In another embodiment, tip receiving cones can be integrally molded as part of the core.

The instrument can carry first and second spaced apart treatment applying tips. At least a portion of each tip slidably engages a respective cone which is part of the central core. Such tips can be fixedly attached to the handle by adhesive, induction welding or the like all without limitation.

Reference will now be made, by way of example, to the accompanying drawings, in which:
Fig. 1A is a top plan view of an instrument embodying the invention;
Fig. 1B is a side elevational view of the instrument of Fig. 1A;
Fig. 2 is a sectional view taken along plane 2-2 of Fig. 1B;
Fig. 3 is a perspective view of the handle of the instrument of Fig. 1A without treatment applying tips;
Fig. 3A is a perspective view of the handle of Fig. 3 with treatment applying tips;
Fig. 4 is an end view of the handle of Fig. 3;
Fig. 5A is a top plan view of the instrument handle of Fig. 3;
Fig. 5B is a side elevational view of the handle of Fig. 5A;
Fig. 6 is a view in section of the handle of Fig. 5B taken along plane 6-6 thereof;
Fig. 7 illustrates a practitioner gripping the instrument of Fig. 1 adjacent to a tip;
Figs. 8A, 8B and 8C illustrate rotating the instrument of Fig. 1;
Fig. 9 is a perspective view of an alternate handle of an instrument embodying the invention;
Fig. 9A is a perspective view of the handle of Fig.9 with the treatment applying tips;
Fig. 10A is a side elevational view of the instrument of Fig. 9A;
Fig. 10B is a side elevational view of the handle of Fig. 9.;
Fig. 11A is a sectional view taken along plane 11A-11A of Fig. 10A;
Fig. 11B is an enlarged partial sectional view of an end region of Fig. 11A;
Fig. 11C is a sectional view taken along plane 11C-11C of Fig. 10B;
Fig. 12A is a sectional view taken along plane 12A-12A of Fig. 10B;
Fig. 12B is an end view of the handle of Fig. 10B;
Fig. 12C is an end view of the handle of Fig. 10B with deformable gripping members;
Fig. 13A is a perspective view of a molded core useable in the instrument of Fig. 9A;
Fig. 13B is a side elevational view of the core of Fig. 13A;
Fig. 13C is a sectional view taken along plane 13C-13C of Fig. 13B;
Fig. 14A is an exploded perspective view of a tip structure usable with the handle of Fig. 3;
Fig. 14B is a perspective view of a tip structure usable with the handle of Fig. 10B;and
Figs. 15A-15D are a series of views of an alternate form of a tip structure in an instrument embodying the invention.

### DETAILED DESCRIPTION OF THE EMBODIMENTS

While embodiments of this invention can take many different forms, specific embodiments thereof are shown in the drawings and will be described herein in detail with the understanding that the present disclosure is to be considered as an exemplification of the principles of the invention and is not intended to limit the invention to the specific embodiment illustrated.

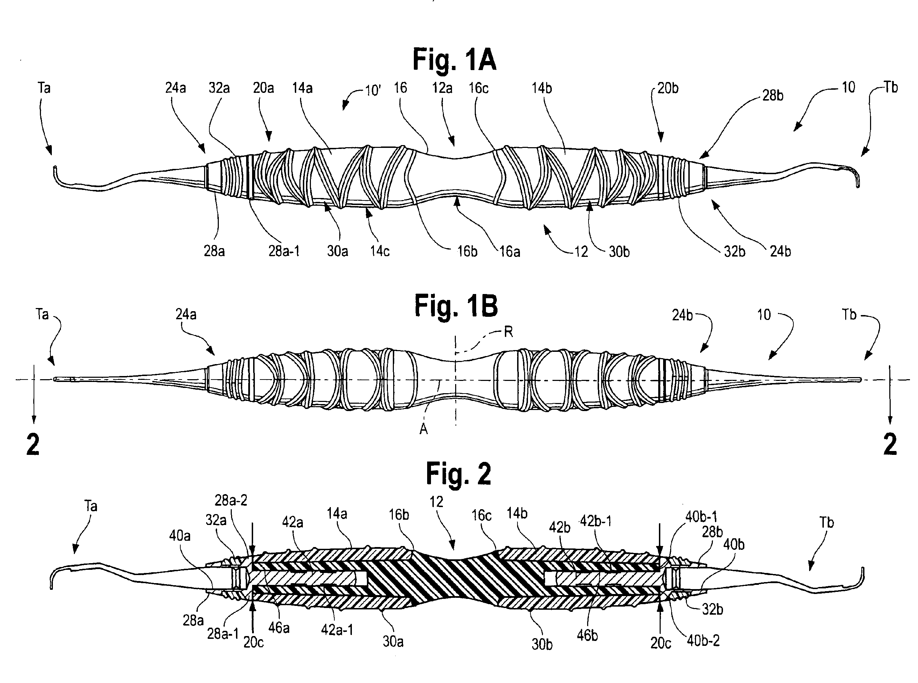

Figs. 1 A, 1 B illustrate two views of an instrument 10 embodying the invention. The instrument 10 includes, in a preferred embodiment, a handle 10' having a molded resin central core 12 with spaced apart over molded silicon grips 14a, 14b. The central core 12 has a concave central section 12a having an external surface 16 with a centrally located minimal diameter 16a.

Ends 16b, c of the central section 12a smoothly join an exterior surface of each of the over molded regions 14a, b. The regions 14a, b exhibit a common maximal diameter, or apex, 14c. Each of the over molded regions 14a, b has an external periphery that decreases non-linearly in diameter along an axis A, from the apex 14c to and terminates at a respective annular end 20a, b with a common diameter 20c, best seen in Fig. 2.

In a preferred embodiment, each of the ends 20a, b of handle 12 carries a respective tip structure 24a, b. Each of the tip structures incorporates a respective conical region 28a, b. The conical regions 28a, b slidably engage and are fixedly attached to central core 12, best seen in Fig. 2.

Each of the conical end regions 28a, b carries a treatment applying structure such as points Ta, Tb. It will be understood that the instrument 10 could be configured with a single point Ta and an end cap as an alternate to the point Tb without departing from the spirit and scope of the present invention. Alternately, point Ta could be replaced with a mirror or other selected dental appliance.

In a preferred embodiment, each of the elastomeric over molded regions 14a, b can carry curved gripping ridges or protrusions, such as 30a, b. Further, the tip structures 24a, b can also carry elastomeric gripping members 32a, b. Members 32a,b can include various pigments to color code the instrument.

As illustrated in Figs. 1A, B, the regions 14a, b smoothly blend into the tapered regions 28a, b. The diameter 20c of end regions of handle 12 corresponds to a diameter of tip structure 24a, b. This provides for a smooth transition between the elastomeric members 14a, b and members 32a,b.

Fig. 2 is a sectional view taken along plane 2-2 of Fig. 1 B, which illustrates further the relationship between handle 10' and tip structures such as 24a, 24b. As illustrated in Fig. 2, handle 10' tapers down to end regions with respective diameters 20c for purposes of providing a smooth interface between the conical region 28a-1 of the adjacent tip structure and the respective end region 40b-1 or 40b-2. This smooth interface will promote ease of use and operator comfort during a selected dental procedure.

The presence of the conical feature 28a-1 facilitates providing enough thickness at the end regions of the core 12 to promote the integrity of the handle 10' throughout its lifetime and during repeated sterilization procedures.

The tip structures 24a, b can exhibit a greater degree of taper than found in the elastomeric over molded members 14a, b. It will be understood that the degree of taper of the cones of the tip structures 24a, b could be adjusted to be substantially the same as the degree of taper as the elastomeric regions 14a, b without departing from the spirit and scope of the present invention.

The points Ta, Tb are slidably received in respective borings or openings 40a, b. The points Ta, Tb can be fixedly attached to the structures 24a, b by welding, adhesive or the like all without departing from the spirit and scope of the invention. They can be affixed to structures 24a,b before or after those structures are attached to central core 12.

The respective tip structures 24a, b each also carry an axially extending stem 42a, b. The stems 42a, b are slidably received in an axially oriented opening 46a, b in core 12.

Preferably the stems 42a,b will carry one or more undercut surfaces 42a-1, 42b-1. The stems 42a, b can be fixedly attached to the center core 12 by adhesive, induction heating or the like, all without limitation. When so processed, the tip structures 24a,b are permanently affixed to the instrument 10 and are not removable. The adjacent portions of core 12, when heated, will flow into spaces defined by the undercut surfaces 42a-1, 42b-1 thereby blocking axial movement of tip structures 24a,b. Alternatively, the points Ta and Tb, or structures 24a,b could be removable and replaceable.

The stems 42a,b could also carry, in a preferred embodiment, one or more rotation blocking flats. The handle can be formed with matching adjacent flat surfaces. Alternately, if induction heating, or welding is used to attach the stems to the handle, adjacent portions of the core 12 will flow into any spaces adjacent to the flats. When the core 12 cools, it becomes rigid and blocks rotation of the respective tip/stem combination.

Handle 10', except possibly for members 30a, b and 32a, b is symmetrical relative to a central axis A. It will be understood that cones 28a, b could be optionally excluded without departing from the spirit and scope of the invention.

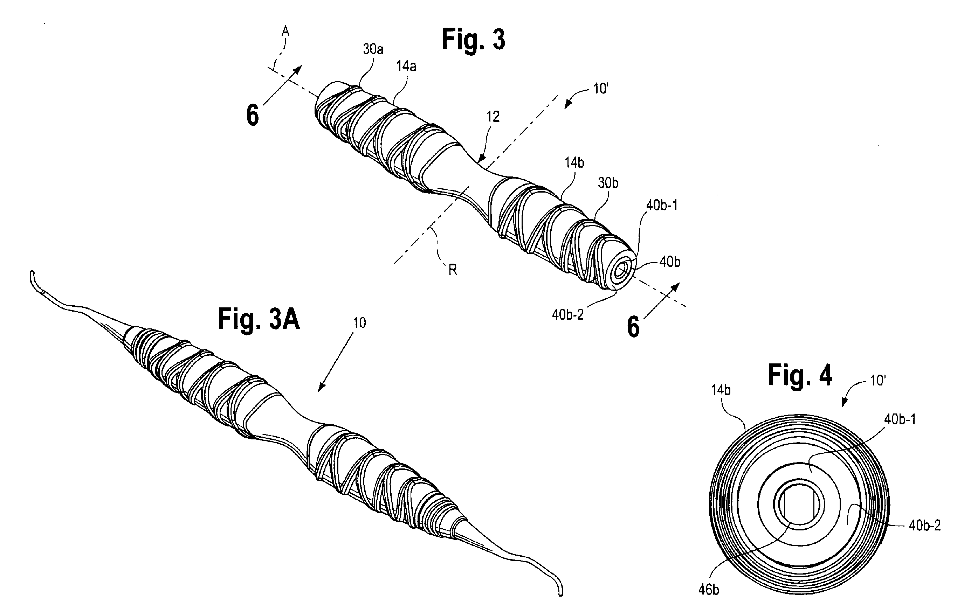

Fig. 3 is a perspective view of the handle 10' having central core 12 and overmolded gripping regions 14a, b without the tip structures 24a, b. An end surface 40b-1 of central core 12 is adjacent to an end surface 40b-2 of overmolded member 14b. Fig. 3A is a perspective view of the instrument 10 with treatment applying tips attached to handle 10'. Fig. 4 is an end view of the handle 10' of Fig. 3.

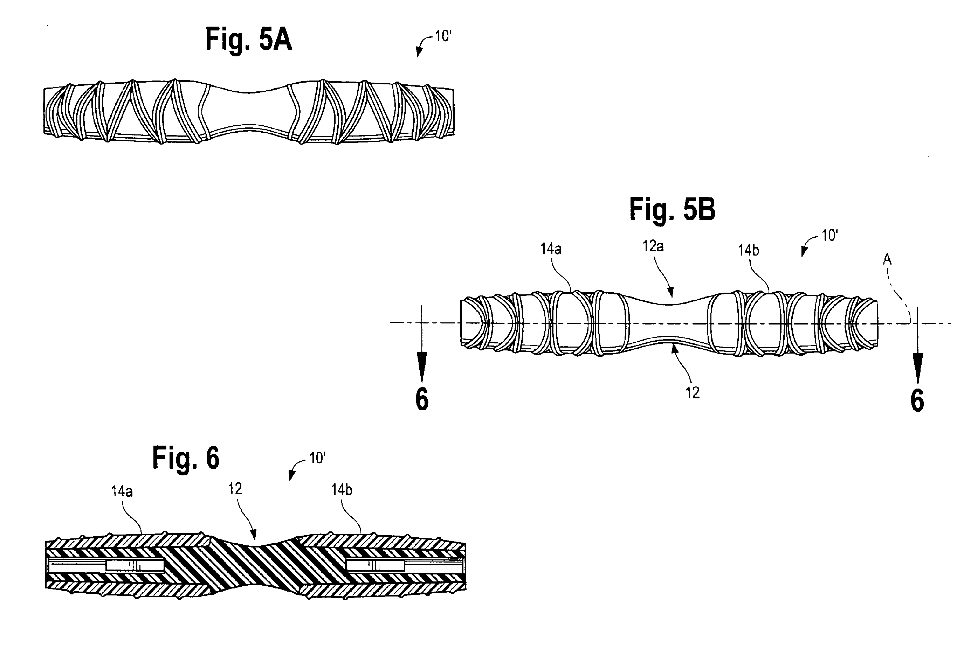

Figs. 5A, 5B are top and side views respectively of the handle 10', without tip structures. Fig. 6, a sectional view taken generally along plane 6-6 of Fig. 5B in the absence of the tip structures 24a,b illustrates further details of the handle 10'.

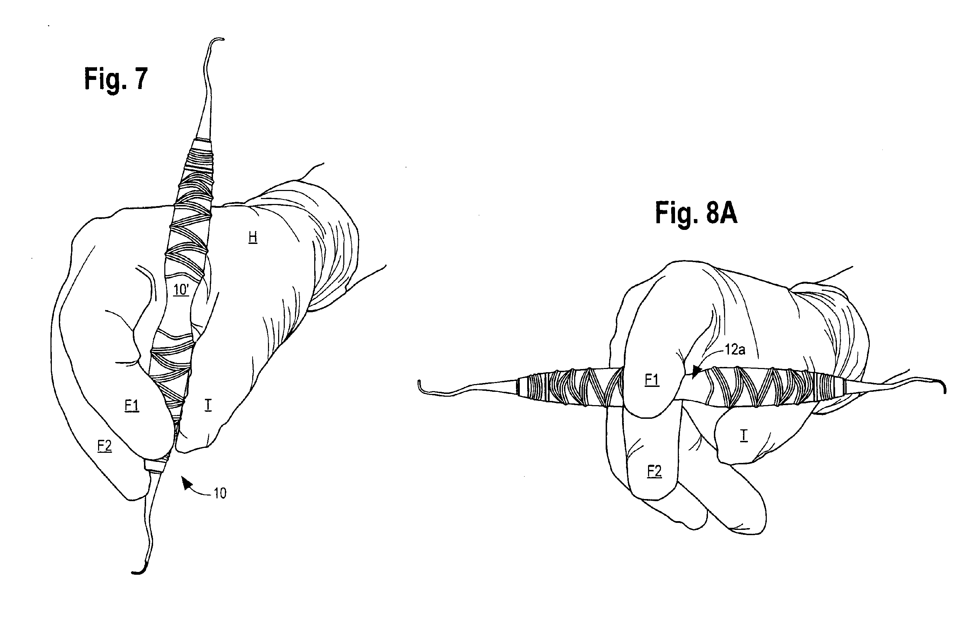

Fig. 7 illustrates the instrument 10 as it would be normally gripped by a hand H of a user. As illustrated in Fig. 7 the user's thumb T, index finger F1 and second finger F2 collectively grip the instrument 10 adjacent to respective annular ends 20a, b. of the handle 10'. The thumb T and finger F1 of the hand H of the user grip the respective over molded elastomeric region 14a or 14b adjacent to the respective annular end 20a, b.

The end of the finger F1 extends onto the proximal end of the respective tip structure 24a or 24b. Finger F2 abuts the elastomeric material 32a or 32b which is carried by the respective tip structure. The common diameter 20c exhibited by the annular end regions 20a, b as well as the respective tip structure 24a, b provides a smooth, comfortable transition for the user's thumb T, as well as fingers F 1, F2 depending on the user's preferred grip.

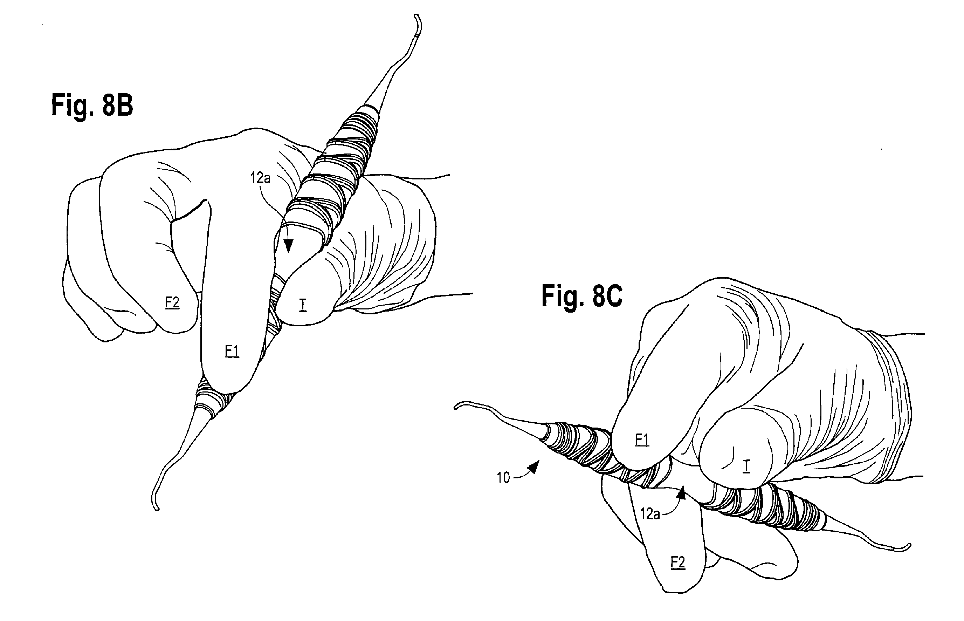

Figs. 8A, 8B and 8C illustrate an end to end rotation sequence of the instrument 10 in the hand H of the user. The fingers F1, F2 are located adjacent to the concave central surface 12a of the handle 10'. The user's thumb T is displaced from the central section 12a adjacent to respective elastomeric region 14a or 14b. As further illustrated in Fig. 8B, the user has moved finger F2 away from the instrument 10 and has moved the end of the thumb T into the vicinity of the concave central region 12a. The user's thumb T in combination with finger F1 has initiated an end to end rotation of the instrument 10 about an axis of rotation R that extends from the concave region 12a perpendicular to the axis A.

Fig. 8C illustrates a further step in the rotational sequence, where the thumb T and index finger F1 of the user are located adjacent to opposite ends of the concave central section 12a with the second finger F2 positioned adjacent to the minimal central diameter region 16a as the instrument 10 completes the end to end rotation. The user can then move the thumb T as well as fingers F1, F2 to the distal end of the instrument adjacent to the respective tip structure 24a or b as illustrated in Fig. 7.

The concave central section 12a facilitates tacitly based end-to-end rotation of the instrument 10. The concave central region 12a provides immediate and positive feedback to the user as to the location of the instrument relative to the user's thumb T and fingers F1, F2.

The above described method can be expected to improve user's speed and confidence in rotating the instrument 10. Further, the smooth transition provided by the instrument 10 between elastomeric over molded regions 14a, 14b and the respective structures 24a, 24b can be expected to improve user's efficiency and operational comfort with the instrument 10.

In an alternate embodiment discussed below, cones can be integrally molded at the ends of a rigid core. In this embodiment, tip structures are fixedly or removably coupled to the core, adjacent the respective pre-molded cones.

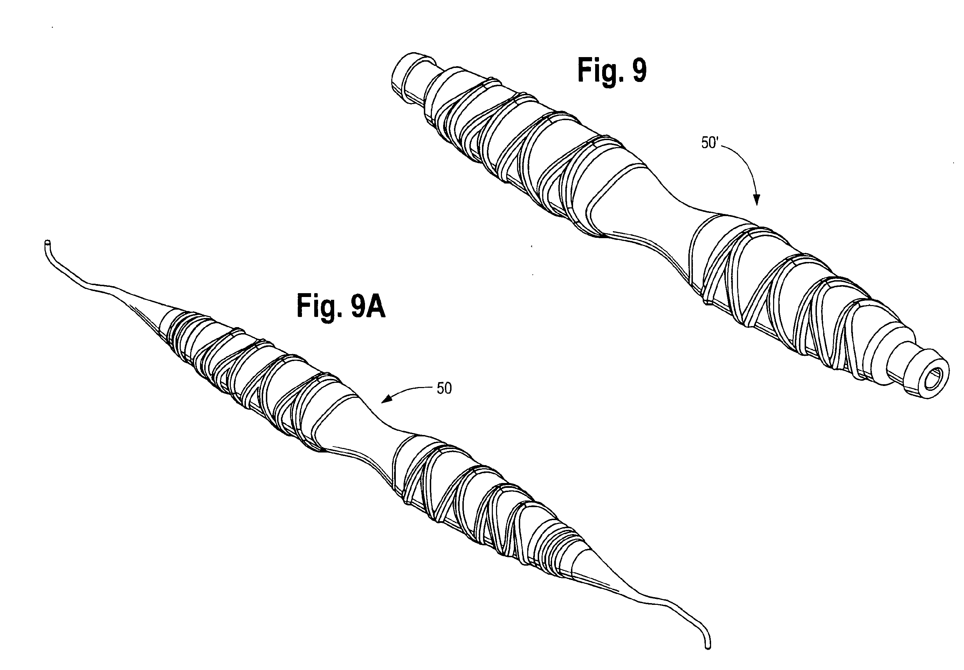

Fig. 9A is a perspective view of an alternate embodiment of a dental instrument 50 embodying the invention. Fig. 9 is a perspective view of a handle 50' of the instrument 50 of Fig. 9A.

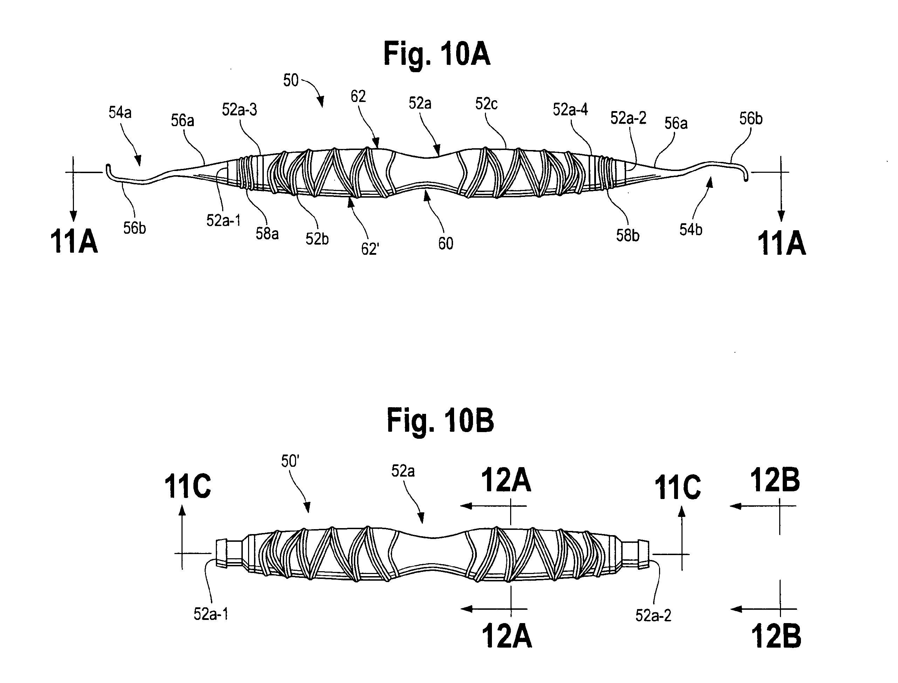

Fig. 10A is side elevational view of the instrument 50 of Fig. 9A. As illustrated in Figs. 9A,10A, instrument 50 includes a molded central core 52a and overmoldings 52b, c. The overmoldings 52b,c are preferably formed of an elastomeric silicone, Durometer 10-20 Shore A, for user comfort.

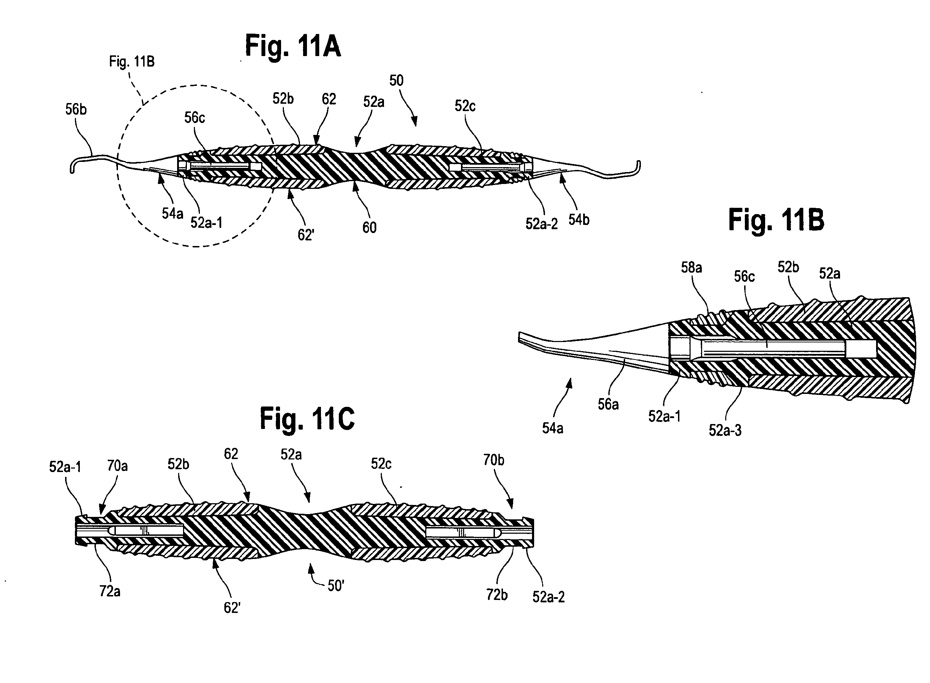

The instrument 50 carries in the embodiment of Figs. 9A, 10A first and second spaced apart treatment applying tips 54a, 54b. The tips 54a, b each include a proximal conical portion of 56a, an integrally formed, distally oriented, tip region 56b and a proximately oriented connecting stem 56c, best seen in Figs. 11A, 11B.

The instrument 50 can also carry, in a disclosed embodiment, hollow conical gripping elements 58a, 58b.

In the embodiment of Figs. 9A, 10A the tip geometry 54a,b, abuts spaced apart end regions 52a-1, 2. The end regions 52a-1,-2 can be integrally formed with the resin central core element 52a.

Further details of the structures of Figs. 9A, 10A are illustrated in Figs. 11A, 11B. Fig. 11 A is a side sectional view taken along plane 11A-11A of Fig. 10A. It will be understood by those who are skilled in the art that the molded central core 52a has a central minimal diameter region indicated generally at 60 and a larger adjacent diameter region 62' on each side of the central region 60. Adjacent to diameter 62' is a maximal diameter 62. The diameter 62 decreases linearly or non-linearly, along axis A, to a diameter which corresponds to a proximal diameter of the core members of 52a-3, 52a-4.

Fig. 9 is a perspective view of the handle of instrument 50 without the tip geometry 54a,b. Fig. 10B is a side elevational view of the handle 50'.

Fig. 11C is an elevational view taken along plane 11C-11C of Fig. 10B. As illustrated in Figs. 10B, 11C, the central core element 52a carries first and second integrally formed cylindrical end regions 70a,b.

Each of the regions 70a,b includes a recessed cylindrical section 72a, 72b which receives respective conical gripping members 58a, 58b. The members 58a, 58b are contained in the cylindrical recess regions 72a,b in part by distally located ends 52a-1, -2.

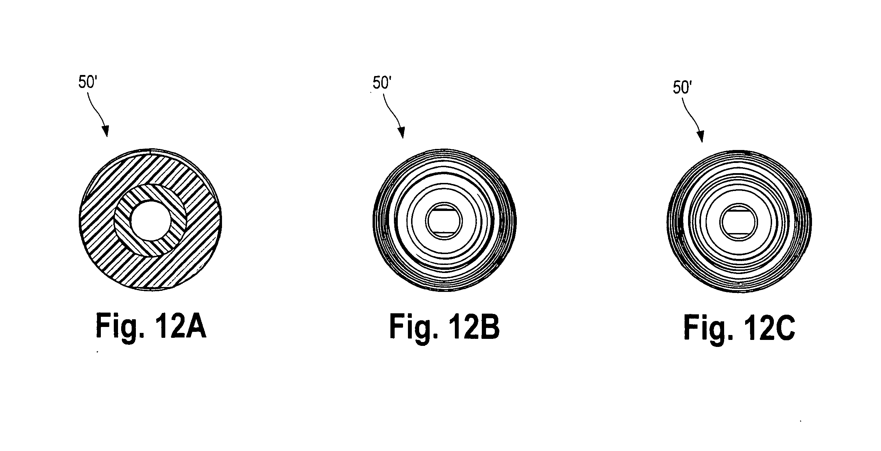

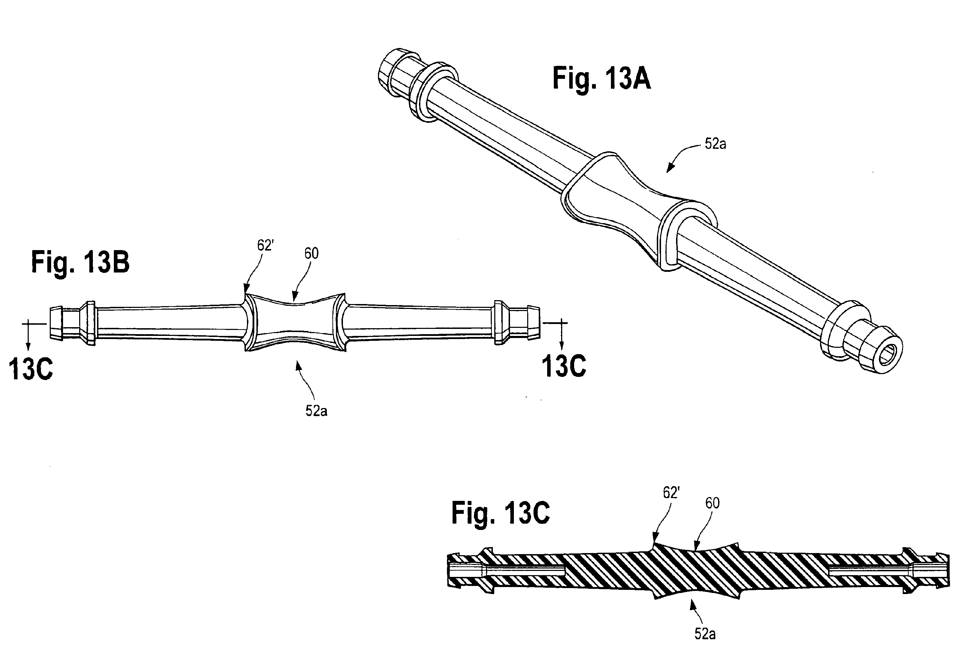

Fig. 12A is a sectional view taken along plane 12A-12A of Fig. 10B. Fig 12B is an end view of the handle portion 50'. Fig. 12C is an end view of the handle 50' with gripping members 58a,b in place. Figs. 13A-C illustrate various views of core element 52a.

While the instrument 50 has been illustrated with attached tips, such as the tip elements 54a,b it will be understood that the handle 50' could be used with replaceable tips. Further, the way in which the tip geometries 54a, 54b are coupled to the handle 50' is not a limitation of the present invention. Tip geometries 54a,b could be glued or welded, for example, to the handle 50' where they are not intended to be removable or replaceable. Devices other than treatment applying tips, for example probes or mirrors could be affixed to handle 10' or 50' without departing from the spirit and scope of the invention.

It will be understood that the core 12, 52a could be molded of a resin that becomes rigid when cured. Alternately, metal could be used. A variety of molding techniques can be used. Those of skill in the art will recognize that such molding techniques are not limitations of the present invention.

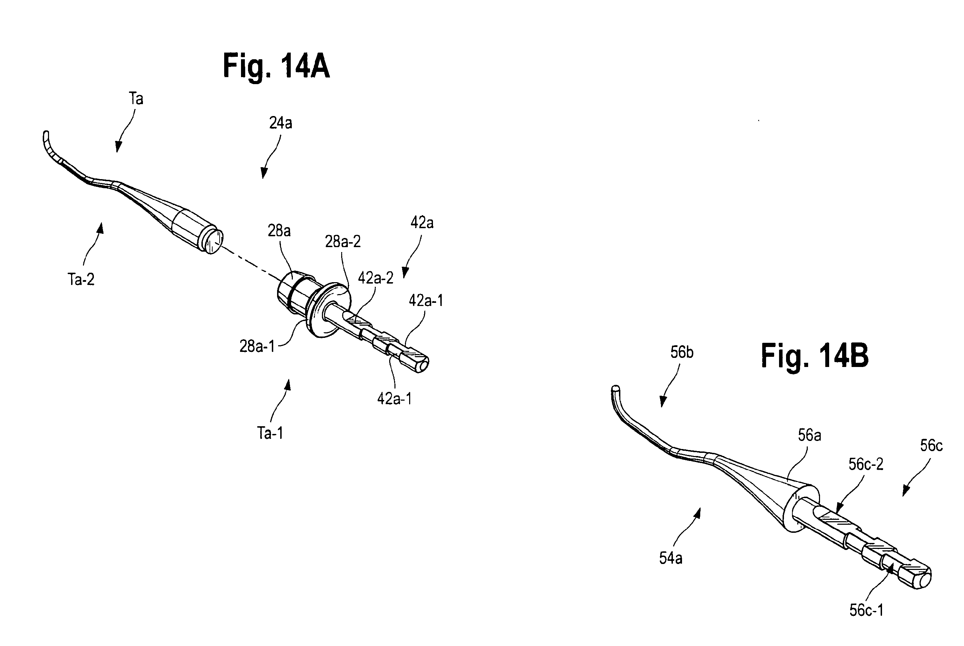

Fig. 14A illustrates additional details of exemplary tip structures 24a (or 24b). The structure 24a includes a proximal end Ta-1 and a distal end Ta-2. The distal end Ta-2 carries a treatment applying structure Ta as would be understood by those of skill in the art in connection with hand held dental instruments. Representative instruments could include scalers, probes, explorers and the like, all without limitation.

The distal end, in an exemplary embodiment can be slidably received into the boring 40a of the proximal end structure Ta-1 and attached thereto either before or after the structure member 24a,b is attached to core section 12. Attachment can be effected by adhesives, welding, brazing and the like all without limitation. The tip structures 24a,b can be formed, without limitation of metal or plastic.

Structures 24a,b preferably carry on a stem, such as stem 42a, at least one curved or flat undercut surface such as 42a-1. As described above, when the stem 42a has been inserted into core 12 and induction heated, or welded, the resin adjacent to surface(s) 42a-1 softens and flows into the region formed by the undercuts.

When the resin cools, it hardens thereby blocking axial movement of structures 24a or 24b relative to the adjacent handle. Similarly, heated resin will flow adjacent to surface(s) 42a-2. When it cools and hardens that resin will block rotation of structures 24a,b relative to the handle.

In summary, when cured, the interaction between the flats or surfaces 42a-1, 2 and the respective material of the core 12 adjacent thereto results in an instrument which requires greater tip extraction forces (axially) and tip rotation forces relative to the handle 12 before the instrument fails than would otherwise be the case in the absence of the flats or surfaces, 42a-1,-2. Thus, the instrument 10 exhibits greater torque resistance in the presence of forces attempting to rotate the respective tip structures 24a, b, relative to handle 10'. Additionally, the instrument 10 exhibits greater axial retaining forces to retain the tip structures 24a, b within the handle 10' in the presence of axial extraction forces.

Fig. 14B illustrates added details of a tip structure such as 54a,b. Preferably structures such as 54a,b will carry undercut curved or flat surfaces such as 56c-1 (to block axial movement) and flats 56c-2 (to block rotation) as discussed above.

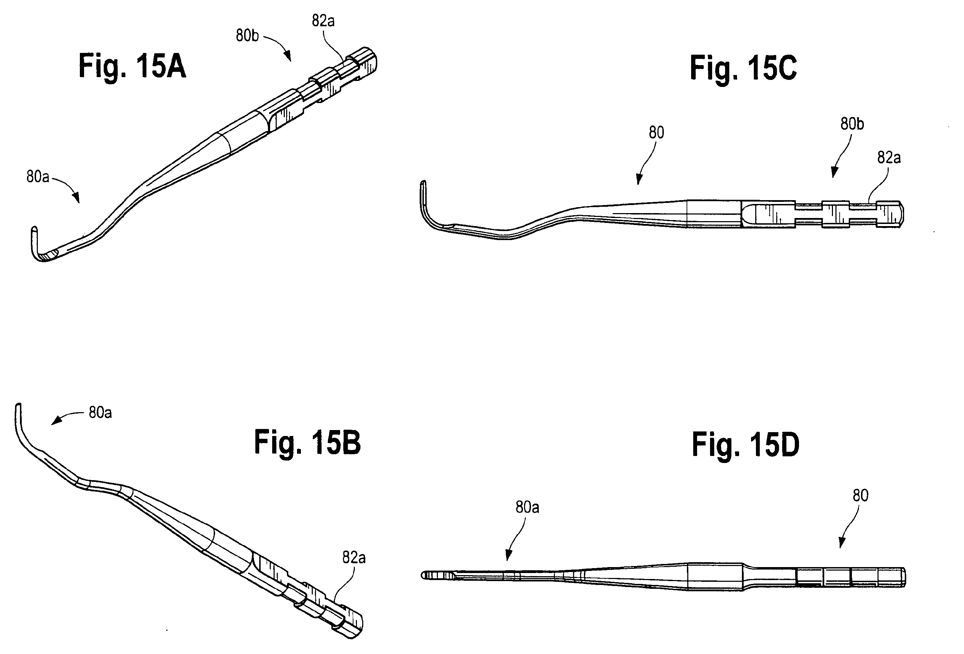

Figs. 15A-D illustrates various views of alternate points or tip geometries 80. The structures 80 can be formed with a distal treatment applying end region 80a which can be formed in a variety of shapes. The structures 80 also are formed with proximal end regions 80b. The regions 80b can be inserted into pre-molded handles and induction heated as described above to fixedly attach tip geometry and respective handle together. Undercuts 82a block axial movement relative to the respective handle. Flats 82b inhibit rotary movement relative to the handle. Alternately, the respective tip geometries can be inserted into a mold and a resin or metal handle molded around them.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims.

## Claims

1. A dental instrument comprising:
at least one axially elongated section with first and second ends, the section having a periphery that varies in diameter in an axial direction; and
a concave central region that extends from one of the ends.

2. A dental instrument as in claim 1 having an elongated treatment tip carried by and extending from the other end.

3. A dental instrument as in claim 1 which has a second axially elongated section with third and fourth ends, with a second periphery that varies in diameter axially, the concave region extends from one of the third or fourth ends.

4. A dental instrument as in claim 3 where the first and second elongated sections each have a maximum diameter adjacent to the concave region.

5. A dental instrument as in claim 4 where the first and second sections each have a diameter less than the maximum diameter at a respective end displaced from the concave region.

6. A dental instrument as in claim 3 which is symmetrical about a central axis having a substantially rigid core molded of a first material with at least portions of the first and second sections overmolded of a second, different material onto the core.

7. A dental instrument as in claim 6 which carries at least one treatment tip.

8. A dental instrument as in claim 6 which includes at least one tip structure, the tip structure including a truncated cone which carries a treatment applying tip.

9. A dental instrument as in claim 8 where the cone defines a tip receiving depression adjacent to one of the end surfaces.

10. A dental instrument as in claim 8 where a shortest diameter of the concave section exceeds a diameter of the cone adjacent to the treatment applying tip.

11. A dental instrument as in claim 2, the tip having first and second ends, one tip end carries a treatment applying tip geometry, the other tip end carries at least one of an exterior flat surface, or, an undercut region.

12. A dental instrument as in claim 11 where the other tip end is locked axially to the elongated section, in part, by the undercut region, rotation of the other tip end relative to the elongated section is blocked, at least in part, by the flat surface.

13. A dental instrument as in claim 12 where the other tip end is locked axially in part by at least one of adhesive, or material which is part of the elongated section.

14. A dental instrument as is claim 12 where a surface of the elongated section and the exterior flat surface are located adjacent to each other and together contribute to blocking rotation of the other end relative to the elongated section.
